# EUROPEAN PATENT APPLICATION

(11) **EP 2 148 282 A1**
(43) Date of publication of application: **27.01.2010**
(21) Application number: 09153225.9
(22) Date of filing: 19.02.2009
(51) Int. Cl.: G06F 17/30

(54) **Updating a database**

(30) Priority: 25.07.2008 US 220587
(71) Applicant: Mitel Networks Corporation, Ottawa, ON K2K 2W7 (CA)
(72) Inventor: Erb, Paul Andrew, Ottawa Ontario K1N 6M5 (CA)
(74) Representative: Derry, Paul Stefan

(57) **Abstract**

A method and apparatus for concurrently updating a database is provided. An exclusive copy of a record is created in the database, the exclusive copy for exclusive use by a first entity of a first class. First proposed changes to the record from the first entity are posted to the exclusive copy. It is determined if the exclusive copy conflicts with a non-exclusive copy of the record, the non-exclusive copy for non-exclusive use by a plurality of second entities of a second class. If the exclusive copy does not conflict with the non-exclusive copy, the first proposed changes are posted to the record. Hence high availability devices can concurrently modify the database in parallel with low availability configuration applications, with conflict resolution.

## Description

The specification relates generally to databases, and specifically to updating a database.

Concurrency control in databases systems has been accomplished by the use of locking mechanisms. This prevents conflicting concurrent transactions from causing database corruption or retrieving invalid data. A number of methods are used to implement the locking mechanism, including two-phase locking and multiple granularity locking, each with different blocking characteristics. However, these methods all involve blocking a transaction when a potentially conflicting transaction has locked access to the database until such time as the new transaction can obtain locked access to the database.

Other methods for concurrency control allow for not locking the database, such as timestamp ordering or commitment ordering. However, these methods involve restarting a transaction when a conflict is detected. This effectively blocks processing of the transaction until potentially conflicting transactions have completed.

In another method, to avoid any delay to transactions, uncontrolled concurrent access to the database can be allowed with an associated risk of conflicting transactions causing database corruption. This risk can be considered acceptable to provide high availability to feature functionality, with audit mechanisms being used to detect and report corruption which can be resolved automatically or manually.

A combination of locking mechanism and non-exclusive access can also be utilised: a locking mechanism is applied when transactions are initiated from Embedded System Management applications (ESM) or other external applications. However, call processing feature functionality (e.g. a user changing a forwarding number setting) can use uncontrolled concurrent access to the database (regardless of whether the database is locked for system configuration purposes). Hence, two distinct methods are used to access the database. ESM and other external applications ("non-high accessibility entities) access the database using view layer transactions (involving the database locking mechanism for ensuring database integrity). Call processing feature functionality (high accessibility entities) uses table layer access to bypasses the view layer and directly update database table records.

However, rollback support increases the risk of database corruption when introduced into a database that allows concurrent access to the database. This is because two potentially conflicting transactions can overlap without causing corruption as long as the combination of the two transactions is applied to the database at the end of the transactions. However, if one of the potentially conflicting transactions performs a rollback it modifies the database to a previous condition that the second transaction is not aware of.

For example, a first transaction changes field two of a table entry and concurrently a second transaction changes field three of the same table entry. Both these changes can be applied without conflict, however, the change to field three is overwritten with its original value if the first transaction invokes rollback after the second transaction completed. If the change to field three comprises a forwarding number, then the forwarding number will be lost, unbeknownst to the entity which initiated the change.

Embodiments are described with reference to the following figures, in which:
Fig. 1 depicts a system for updating a database, according to the prior art;
Fig. 2 depicts a system for updating a database, according to a non-limiting embodiment; and
Fig. 3 depicts a method for updating a database, according to a non-limiting embodiment.

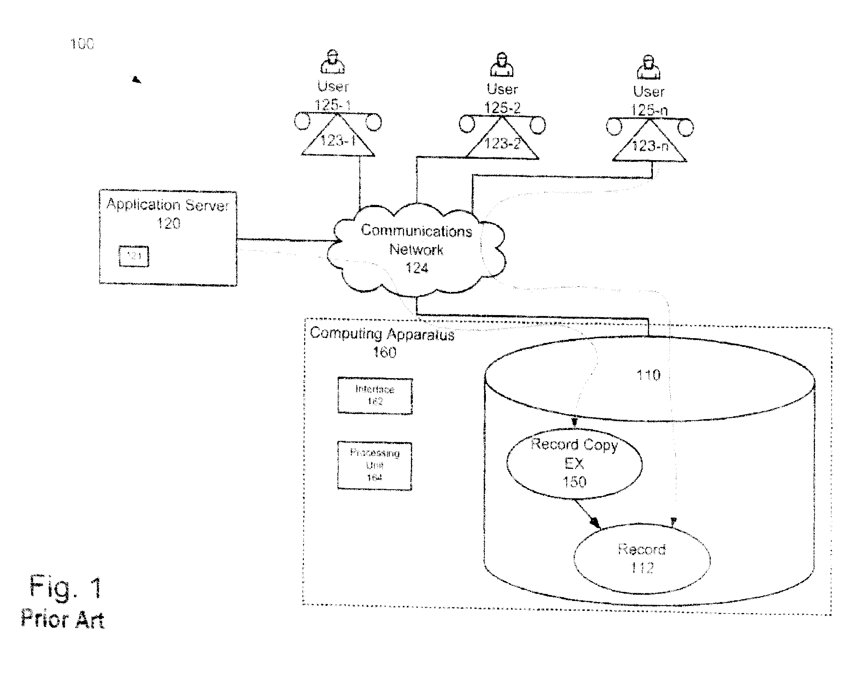

Figure 1 depicts a system 100 for updating a database 110, according to the prior art. The database 110 stores a record 112, and is in communication with an application server 120 and at least one communications device 123-1, 123-2... 123-n (generically a communications device 123, and collectively communications devices 123) via a communications network 124. Each communications device 123-1, 123-2... 123-n can be respectively associated with a user 125-1, 125-2,...125-n (generically a user 125, and collectively users 125). In some embodiments, at least one of the users 125 can be an administrator.

The communications devices 123 comprise any desired combination of wired and/or wireless communications device, telephony device, computing device, laptop computer, personal computer, cell phone, PDA, and the like, enabled to communicate with each other and other communications devices 123, as well as the database 110, via the communications network 124. The communications network 124 comprises any desired combination of wired and/or wireless communications networks for enabling communication between the communications device 123, the database 110, and/or other communications devices. The communications network 124 further enables communication between the server 120 and the database 110. The communications network 124 can include, but is not limited to, analogue networks (e.g. the PSTN), packet based networks (e.g. the internet), wireless networks (e.g. cell-based networks, WiFi, WiMax), LANs, WANs and WLANs.

In some embodiments, the system 100 can comprise a communications system, with the applications server 120 comprising at least one application 121 for assisting communications to and from the communications devices 123, and the record 112 comprising settings (i.e. data) associated with call processing/feature functionality available at a communications device 123. In some embodiments, each communications device 123 corresponds to a separate record 112, in a one-to-one relationship; however the number of records 112 is not to be considered particularly limiting.

Furthermore, in some embodiments, the system 100 comprises an operational layer, which is enabled as an interface between the communications device 123 (and/or the application server 120) and the record 112 (and/or any copies of the record 112, as described below) such that a view of the record 112 is provided to the communications device 123 (and/or the application server 120) which can comprise data from the record 112, and any other records stored at the database 110 that is relevant to the view. Hence, within these embodiments, the manipulation of data occurs within the layer (i.e. within the view), and the record 112 is updated accordingly. Within these embodiments, the layer can comprise a pointer to the record 112 and/or a pointer(s) to specific data within the record 112, and/or pointer(s) to specific data within the any other records stored at the database 110 that is relevant to the view. Hence, it is understood, in the following discussions, that while reference is made to manipulation of records and copies of records, in some embodiments, such manipulation occurs via the layer. Table 1 comprises a non-limiting example of the record 112:

**Table 1: A non-limiting embodiment of the record 112**

| | |
|---|---|
| Communications Device 123 Identifier | 613-555-1212 (123-1) |
| Call Forwarding | Off |
| Call Forward Number | 613-555-1313 |
| SpeedDial 1 | 613-555-1414 |
| SpeedDial 1 | 613-555-1515 |

In the non-limiting example, the data stored in the record 112 comprises a plurality of fields arranged in rows and columns, with each row corresponding to a different setting for the communications device 123 identified in the first row, the first field in the first column identifying the name of a setting and the second field in the second column comprising the value of the setting. However the format of the record 112 is not particularly limiting and other suitable formats are within the scope of present embodiments. In the example, the first row comprises an identifier of the communications device 123-1, in this instance the phone number of the communications device 123-1 (613-555-1212). The second row comprises an on/off setting for call forwarding ("off") and the third row comprises the number that calls are to be forwarded to if the call forwarding setting is "on". The remaining rows comprise settings for speed dial buttons at the communications device 123-1 (i.e. numbers that are to be called should a corresponding button at the communications device 123-1 be actuated). Other settings can occur to a person of skill in the art and are within the scope of present embodiments. For example, in some embodiments, the record 112 does not directly store numbers such as the call forward number or the speed dial numbers, but rather references to system resources, such as a digit string pool (i.e. a pool of numbers that can be allocated).

If the record 112 comprises settings/data associated with call processing/feature functionality available at a communications device 123, the application 121 at the applications server 120 can be enabled to automatically change these settings for at least one of the communications devices 123 according to given criteria. In a non-limiting example, the application 121 can be enabled to change call forwarding settings according to criteria based on time of day (e.g. forwarding calls to voicemail, an answering service, a call centre, or a given number outside of business hours) and/or presence information (e.g. forwarding calls to voicemail, an answering service, a call centre, or a given number based on the presence of a user 125). When a given criteria is met, the applications server 120 attempts to update the database 110 such that the settings stored in the record 112 are updated.

In doing so, an exclusive copy 150 of the record 112 is created in the database 110. Proposed changes to the record 112 (e.g. a change in the forwarding number) are stored in the exclusive copy 150. Continuing with the non-limiting example from Table 1, Table 2 comprises a non-limiting example of the exclusive copy 150 of the record 112 when the call forwarding number is to be changed to 613-555-1234:

**Table 2: A non-limiting embodiment of the exclusive copy 150**

| | |
|---|---|
| Communications Device 123 Identifier | 613-555-1212 (123-1) |
| Call Forwarding | On |
| Call Forward Number | 613-555-1234 |
| SpeedDial 1 | 204-555-8765 |
| SpeedDial 1 | 613-555-1515 |

Hence, the field comprising the call forwarding on/off setting is to be changed to "on", and the field comprising the call forwarding number is to be changed to 613-555-1234, which can be the number of voicemail or an after hours answering service. Further, the field comprising the first speed dial number is to be changed to 204-555-8765. In embodiments where the original record 112 stores references to a system resource, such as a digit string pool, the exclusive copy 150 will also store references to the system resource, and furthermore when changes occur, the change will comprise updating a reference.

If the proposed changes are committed, then the contents of the record 112 are replaced with the contents of the exclusive copy 150. In some embodiments, the exclusive copy 150 becomes the record 112, and Table 2 replaces Table 1, while in embodiments that include the layer, the relevant data is updated via pointers. While doing so, the system 100 is generally locked from making a potentially conflicting second exclusive copy (e.g. by another application and/or another applications server) to prevent changes until the proposed changes in the exclusive copy 150 are stored in the record 112. In general, the applications server 120 is representative of a first class of entities which do not require high availability access to the database 110.

However, the process is flawed in situations where the system 100 comprises a second class of entities which do require concurrent high accessibility access to the database 110, such as the communications devices 123. In other words, the communications devices 123 are generally enabled to make changes to the record 112, for example via any suitable combination of buttons, applications, GUIs (graphic user interfaces), menu items, etc. available at the communications devices 123. Such changes can be generally initiated via the receipt of input data at a communications device 123 (e.g. via user actuation of a button, and/or meeting given criteria such as time of day and/or presence). As such, changes to the record 112 that occur via the communications devices 123 should occur with minimal latency as the users 125 are generally initiating such changes via the communications devices 123. Such latency is achieved by enabling the communications devices 123 to make changes directly to the record 112. However, changes to the record 112 can be lost if made after the exclusive copy is created and before the exclusive copy 150 is saved as the contents of the record 112 are generally replaced by the contents of the exclusive copy 150.

For example, a communications device 123 can store a call forward number in the record 112 (e.g. according to input received from a user 125), after the exclusive copy 150 is created, but before the contents of the exclusive copy 150 replaces the contents of the record 112. For example, after the exclusive copy 150 as presented in Table 2 is created, the communications device 123 can change the call forward number to 613-555-5678 (e.g. a cell phone number of a user 125). However, when the contents of the exclusive copy 150 replaces the contents of the record 112, the call forward number that had been stored in the record 112 by the communications device 123 is in turn replaced by whatever call forward number, if any, is stored in the exclusive copy 150 (e.g. an old call forward number, a new call forward number as determined by the applications server 120). The user 125 is oblivious to this process, believing that the call forward number stored via the communications device 123 is in effect. Thus important calls can be forwarded to an incorrect number.

In embodiments where the record 112 stores references to a system resource, such as a digit string pool, if a reference is overwritten, then the underlying resource is lost: the resource is still sitting in the system unlinked. Hence, the database 110 becomes corrupt.

Alternatively, in some embodiments, rollback of the changes made to the exclusive copy 150 can occur after the contents of the record 112 is replaced by the contents of the exclusive copy 150 and after changes to the record 112 are subsequently made by a communications device 123. In this case, rollback will again result in the loss of changes to the record 112 by the communications device 123.

To enable creation of the exclusive record 150, and updating of the database 110, in some embodiments, the database 110 is an element of a computing apparatus 160, the computing apparatus 160 comprising a communications interface 162 enabled to communicate with the database 110, and/or the applications server 120 and/or the communications devices 123, via any desired wireless or wired protocol. The computing apparatus 160 further comprises a processing unit 164 enabled for creating the exclusive copy 150 and updating the database 110. In other embodiments, the computing apparatus 160 can be a separate element from the database 110.

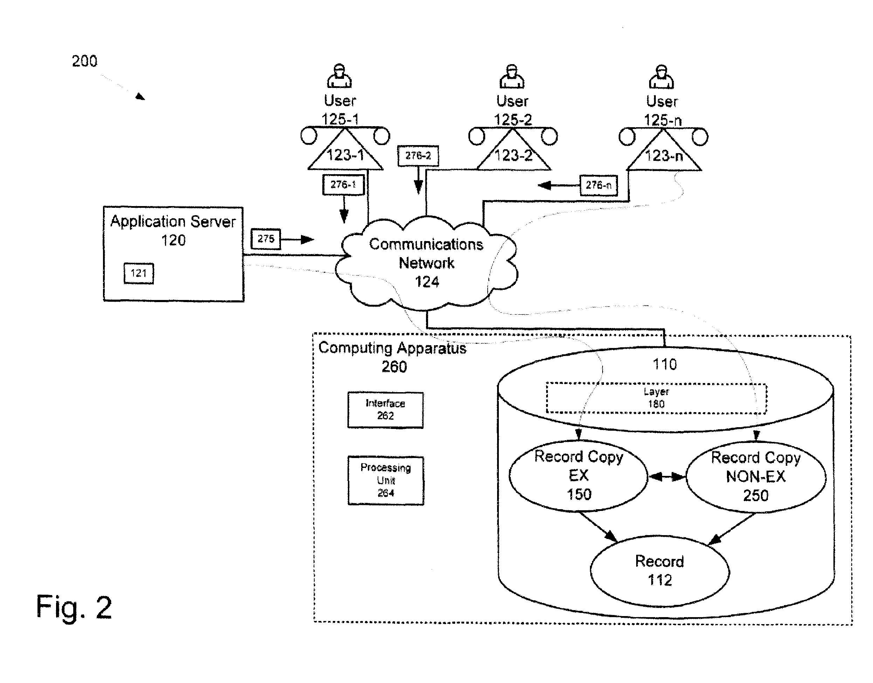

Attention is now directed to Figure 2 which depicts a system 200 for concurrently updating the database 110, according to a non-limiting embodiment. The system 200 is substantially similar to the system 100, with like elements depicted with like numbers. The system 200 comprises a computing apparatus 260 similar to the computing apparatus 160, which comprises a communications interface 262, similar to the communications interface 162, and a processing unit 264, similar to the processing unit 164. However, in the system 200, when a communications device 123 attempts to make a change to the record 112, a non-exclusive copy 250 of the record 112 is created for non-exclusive use by the communications devices 123, such that each communications device 123 can post changes to the non-exclusive copy 250. The contents of the non-exclusive copy 250 can then replace the contents of the record 112 in order to update the database 110. Such an update process can occur periodically and/or triggered when pre-configured criteria are met and/or when a change occurs to the non-exclusive copy 250.

Continuing with the non-limiting example from Tables 1 and 2, Table 3 comprises a non-limiting example of the non-exclusive copy 250 of the record 112 when the call forwarding number is to be changed to 613-555-5678 by the communications device 123:

**Table 3: A non-limiting embodiment of the non-exclusive copy 250.**

| | |
|---|---|
| Communications Device 123 Identifier | 613-555-1212 (123-1) |
| Call Forwarding | On |
| Call Forward Number | 613-555-5678 |
| SpeedDial 1 | 613-555-1414 |
| SpeedDial 1 | 613-555-1515 |

Hence, the field comprising the call forwarding on/off setting is to be turned "on", and the field comprising the call forwarding number is to be changed to 613-555-5678, which can be, for example, a cell phone number of a user 125. In embodiments where the original record 112 stores references to a system resource, such as a digit string pool, the non-exclusive copy 250 will also store references to the system resource, and furthermore when changes occur, the change will comprise updating a reference.

In some exemplary non-limiting embodiments, a database update comprises a sequence of operations similar to the following: Start Session; Read Record(s); Start Transaction on Record(s); Modify Record(s); Commit Transaction; End Session.

In some of these embodiments, the start transaction operation only succeeds if allowed by the database locking mechanism (and interdependent records are locked for access). In addition, a test can be made for any existing non-exclusive copies (similar to the non-exclusive copy 250) during the start transaction and changes from any existing non-exclusive copies are saved to the record 112 prior to locking interdependent records for access. Hence, in these embodiments, locking occurs during the start transaction before the exclusive copy 150 is created, and any changes that have occurred in existing non-exclusive copies 250 are saved to the record 112 to avoid conflict.

Changes during the transaction are applied to the exclusive copy 150 and not applied to the database until the Commit Transaction operation is received. If there is a non-exclusive copy 250 when the Commit Transaction operation is processed (i.e. the non-exclusive copy 250 was created after the creation of the exclusive copy 150), conflict detection is applied between the exclusive copy 150 and the non-exclusive copy 250 to determine if changes to the non-exclusive copy 250 conflict with changes to the exclusive copy 150. If so, a conflict resolution mechanism can be implemented to resolve the conflict. Otherwise, the exclusive copy 150 is discarded and the Commit Transaction operation fails.

The conflict resolution mechanism modifies the contents of record 112 to reflect the combined changes of the exclusive copy 150 and the non-exclusive copy 250.

In some embodiments, a log of the conflict/and or changes can be generated. In some of these embodiments, the log can be transmitted to at least one of the communications devices 123, for example a communications device 123 associated with an administrator and/or the communications device 123 which originated the conflicting change to the non-exclusive copy 250.

Furthermore, rollback occurs only via the exclusive copy 150. In other words, if changes to the exclusive copy 150 are rolled back, then the exclusive copy 150 is discarded. If the changes to the exclusive copy 150 are committed, then the contents of the records 112 are replaced by the contents of the exclusive copy 150, in conjunction with the conflict resolution mechanism.

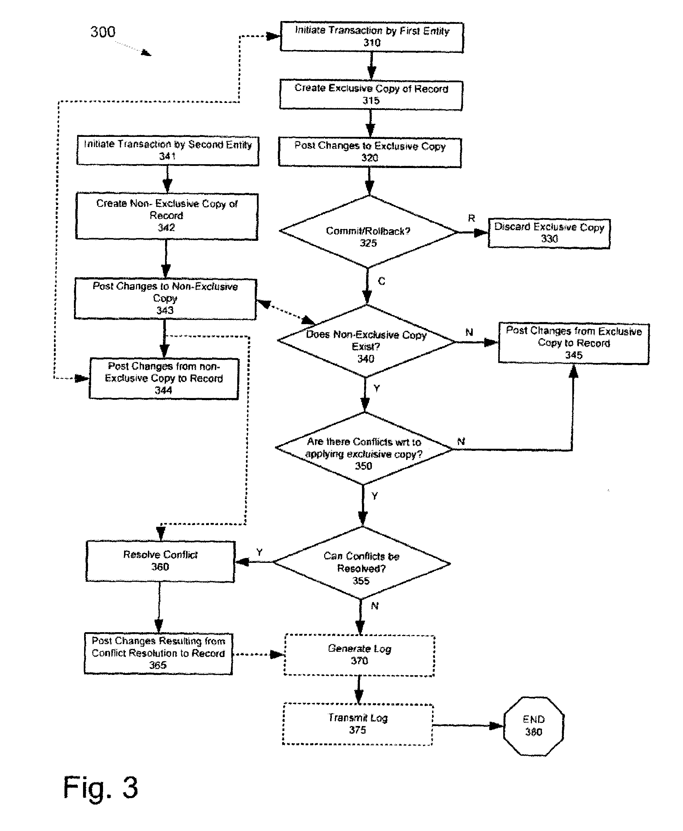

Attention is now directed to Figure 3 which depicts a method 300 for concurrently updating a database. In order to assist in the explanation of the method 300, it will be assumed that the method 300 is performed using the system 200. Furthermore, the following discussion of the method 300 will lead to a further understanding of the system 200 and its various components. However, it is to be understood that the system 200 and/or the method 300 can be varied, and need not work exactly as discussed herein in conjunction with each other, and that such variations are within the scope of present embodiments.

At step 310 a transaction at the database 110 is initiated by a first entity of a first class. In the depicted embodiment, the first entity comprises the applications server 120, however it is understood that in other embodiments, the system 200 can comprise other entities of the first class. Entities of the first class are generally entities that are satisfied with low availability to the database 110, and relatively high latency for changes to the database 110 (e.g. latency above a given threshold) initiated by the entities of the first class is sufficient for the operation of these entities. Such a transaction can be initiated by the applications server 120 transmitting a record update command 275 to the database 110 via the communications network 124, the record update command 275 comprising the data for updating the record 112 (e.g. Table 1) and hence the database 110. In a specific non-limiting embodiment, the record update command 275 comprises a sequence of database operations that can include: Start Transaction; Modify Record(s); Commit Transaction; End Transaction. In some embodiments, the sequence of database operations can comprise a plurality of Modify Record(s) commands that can include add commands, delete commands, read commands, and the like. These operations can be done individually or in combination (e.g. a single Modify Transaction Record(s) can be used in place of Start Transaction; Modify Record(s); Commit Transaction etc.). Any suitable variation is within the scope of present embodiments. For each record being modified, during each Modify Record(s) operation, an exclusive copy of the record is created, if not created previously.

In some embodiments, when a transaction is started, status indications (described below) are tested for each existing non-exclusive copy that can be involved/affected in the transaction, according to the database locking mechanism. If any involved/affected non-exclusive copy is being modified/reserved for modification, a potential conflict is detected and the transaction start request is denied (failed to lock the database). Otherwise, the database locking mechanism is applied and any non-exclusive copy involved/affected for which changes are complete is applied to the database (subject to conflict detection handling described below) before the transaction is allowed to start in step 344, described in more detail below.

At step 315 the exclusive copy 150 of the record 112 is created (e.g. the exclusive copy 150 initially comprising the contents of Table 1), the exclusive copy 150 for exclusive use by the first entity of the first class, such as the applications server 120. The exclusive copy 150 is generally protected by the same table locks on interdependent records that are established during the Start Transaction operation. The database locking mechanism prevents more than one exclusive copy of the record 112 from being created, but not the creation of the non-exclusive record 250.

At step 320, first proposed changes to the record 112 from the first entity are posted to the exclusive copy 150 (e.g. the exclusive copy 150 now comprising the contents of Table 2), as though accessing the record 112 in the database 110 directly (which in some embodiments is performed via the layer). For example, the data within the record update command 275 can be posted to the exclusive copy 150. In some embodiments, the posting of the first proposed changes can be time stamped such that a time that the change occurred can be later determined.

At step 325, it is determined whether the changes to the exclusive copy 150 are to be committed (i.e. stored in the record 112) with a Commit Transaction operation request or rolled back (i.e. abandoned) with a Cancel Transaction operation request. In some embodiments, roll-back can occur automatically via a timeout process. For example, if a commitment command is not received during a given time period, roll-back occurs automatically.

If rolled back, then at step 330, the exclusive copy 150 is discarded and the record 112 is un-locked if the record 112 has been previously locked.

However, if the exclusive copy 150 is to be committed, at step 340 it is determined if the non-exclusive copy 250 exists. For example, before during or after the creation of the exclusive copy 150 at step 315, a parallel process can occur to create the non-exclusive copy 250. For a non-limiting embodiment of creating the non-exclusive copy 250, attention is briefly directed to steps 341-344.

At step 341, a transaction can be initiated by a second entity of a second class. In the depicted embodiment, the system 200 comprises a plurality of second entities of a second class, and specifically the communications devices 123. However it is understood that in other embodiments, the system 200 can comprise other entities of the second class. Entities of the second class are generally entities that prefer high availability to the database 110, and relatively low latency (e.g. latency below a given threshold) for changes to the database 110 initiated by the entities of the second class is preferred for the operation of these entities. Such a transaction can be initiated by a communications device 123 transmitting a record update command 276 to the database 110 via the communications network 124, the record update command 276 comprising the data for updating the record 112 and hence the database 110. In some embodiments, each of the communications devices 123-1, 123-2,...123-n can transmit a record update command 276-1, 276-2,...276-n, respectively (generically a record update command 276 and collectively record update commands 276). In a specific non-limiting embodiment, the record update command 276 directly modifies the content of the database 110 by requesting and obtaining a pointer to the record 112.

At step 342, the non-exclusive copy 250 of the record 112 is created (e.g. the non-exclusive copy 250 initially comprising the contents of Table 1) by copying the record 112, the non-exclusive copy 250 for exclusive use by the plurality of second entities of the second class, such as the communications devices 123. Furthermore, the database 110 is enabled to distinguish between whether to create an exclusive copy or a non-exclusive copy of the record 112 based on whether an external device (e.g. a communications device 123 and/or the applications server 120) that is attempting to access the database 110 is a low availability device or a high availability device, respectively. Specifically, the database 110 is enabled to distinguish between high availability and low availability devices based on the mode of operation of how the external device is attempting to access the database 110. For example, a low availability device, such as the application server 120, attempts to access the database 110 via a start transaction command, as described above. However, a high availability device attempts to access the database 110 by requesting a direct pointer to the record 112 (i.e. bypassing the start transaction operations). The non-exclusive copy 250 can be made available to the communications devices 123 by providing a pointer to the non-exclusive copy 250 for use on behalf of the communications devices 123. Other processes for making the non-exclusive copy 250 available to the communications devices 123 will occur to a person of skill in the art and are within the scope of present embodiments. Furthermore, creation of the non-exclusive copy 250 may not be accompanied by a lock on the record 112.

At step 343, second proposed changes to the record 112 from the second entities are posted to the non-exclusive copy 250 (e.g. the non-exclusive copy 250 now comprising the contents of Table 3), as though accessing the record 112 in the database 110 directly. For example, the data within the record update commands 276 can be posted to the non-exclusive copy 250. In some embodiments, the posting of the second proposed changes can be time stamped such that a time that the change occurred can be later determined.

In some embodiments, call processing/feature functionality of the communications device 123 and/or the system 200 updates status indications associated with the non-exclusive copy 250 appropriately and/or with the record 112 in the database. These status indications are used to identify:
when the non-exclusive copy 250 is being modified and/or is reserved for modification; when changes to the non-exclusive copy 250 are complete;
when conflicts are detected due to simultaneous exclusive and non-exclusive access; and optionally, when conflict is detected due to simultaneous non-exclusive access.

At step 344 the second proposed changes are posted to the record 112 (e.g. contents of the non-exclusive copy 250 can then replace the contents of the record 112 at step 344: i.e., the contents of Table 1 are replaced by the contents of Table 3) unless a conflict resolution process occurs, as described below. Step 344 can occur periodically and/or upon receipt of a trigger (e.g. from one or more communication devices 123) and/or whenever any change occurs.

Returning now to step 340, a determination that the non-exclusive copy 250 exists is indicative that at least one entity of the second class is attempting to make changes to the record 112 at the same time that the first entity is attempting to make changes to the record 112 and provides an indication that a conflict can exist between the two processes. Such a determination can occur by querying the database 110 for the existence of copies of the record 112 associated with the exclusive copy 150 and/or by testing the status indications associated with the non-exclusive copy 250 of the record 112. If the non-exclusive copy 250 does not exist (i.e. there is inherently no conflict), then at step 345 the first proposed changes are posted to the record 112 (e.g. the contents of the record 112 can be replaced by the contents of the exclusive copy 150: i.e. the contents of Table 1 are replaced by the contents of Table 2). The exclusive copy 150 can then be discarded. Further, the record 112 is un-locked if the record 112 had been previously locked.

If, however, the non-exclusive copy 250 exists, at step 350 it is determined if the exclusive copy 150 conflicts with the non-exclusive copy 250.

In other embodiments, the exclusive copy 150 and the non-exclusive copy 250 can be processed (e.g. by the processing unit 164), to determine differences between them. If the differences exist, there is potential for conflict. In general, a conflict occurs if the entities associated with the exclusive record 150 and the non-exclusive record 250, are each attempting to change a given field in the record 112 (for example the call forwarding number).

In some embodiments, if one or more fields of the exclusive copy 150 are different from the corresponding field of the non-exclusive copy 150, then it can be determined that a conflict exists. For example, if a field dedicated to storing a call forwarding number is different in the exclusive copy 150 and the non-exclusive copy 250, then a conflict can exist.

However, in other embodiments, only fields that are associated with changes to each of the exclusive copy 150 and the non-exclusive copy 250 are compared to determine differences. For example, comparing Tables 1, 2 and 3, in one embodiment a field for storing a first speed dial number can be different in the exclusive copy 150 and the non-exclusive copy 250. However, the first speed dial number in the non-exclusive copy 250 can be the same as the first speed dial number in the record 112, indicating that the communications device 123 was not attempting to change a call forwarding number. In this instance, only the applications server 120 is attempting to change the first speed dial number and no conflict can exist. Alternatively, such a difference can be viewed as a conflict, but is associated with criteria for resolving the conflict (i.e. a field changed in one copy but not in another copy is to be changed in the record 112).

However, again comparing Tables 1, 2 and 3, if the call forwarding number in the non-exclusive copy 250, the exclusive copy 150 and the record 112 are all different, both the applications server 120 and the communications devices 123 are attempting to change the call forwarding number to a different number, and a conflict exists.

For example, if the exclusive copy 150 comprises the contents of Table 2 (i.e. the applications server 120 is attempting to change the call forwarding number to 613-555-1234) and the non-exclusive copy 250 comprises the contents of Table 3 (i.e. the communications device 123 is attempting to change the call forwarding number to 613-555-5678), then a conflict exists.

In some embodiments, conflicts can also be determined by comparing the difference to pre-configured given criteria.

If there are no conflicts, then at step 345 the first proposed changes are posted to the record 112 (e.g. the contents of the record 112 can be replaced by the contents of the exclusive copy 150 at step 345; alternatively, the contents of the record 112 can be replaced by the contents of the non-exclusive copy 250 as each of the applications server 120 and the communications device 123 is attempting to make the same change to the record 112).

However, if at least one conflict exists, it is determined at step 355 if the conflict(s) can be resolved. For example, the system 200 can be provisioned with pre-determined criteria for resolving conflicts. One pre-determined criteria can be to always defer to changes in the non-exclusive copy 250 (i.e. changes initiated via the communications device 123 are always preferred over changes initiated via the administration server 120). Another pre-determined criterion can be to always defer to the change which occurred last, for example in embodiments where the changes are time stamped. In some embodiments, such pre-determined criteria can be specific to a given field/feature. In other embodiments, such pre-determined criteria can be time sensitive. In further embodiments, such pre-determined criteria can be overridden by an administrator of the system 200: for example, the users 125 can be employees of an organization, and the organization can prefer to have final say over call control features in the system 200.

If the conflict(s) can be resolved (i.e. criteria exist for resolving the conflict(s)), then at step 360 the conflict is resolved, the conflict resulting in third proposed changes which can comprise a blend of the first data and the second data. For example, if the applications server 120 is attempting to change both the call forward number and a speed dial number, and a communications device 123 is attempting to change only the call forward number, the third data can comprise the call forward number of the communications device 123 and the speed dial number of the applications server 120. The call forward number of the applications server 120 is discarded.

Continuing with the non-limiting example from Tables 1, 2, and 3, Table 4 comprises a non-limiting example of the third proposed changes, a blend of Tables 2 and 3 with conflicts between them resolved:

**Table 4: A non-limiting embodiment of the third proposed changes.**

| | |
|---|---|
| Communications Device 123 Identifier | 613-555-1212 (123-1) |
| Call Forwarding | On |
| Call Forward Number | 613-555-5678 |
| SpeedDial 1 | 204-555-8765 |
| SpeedDial 1 | 613-555-1515 |

Hence, the field comprising the call forwarding on/off setting is to be turned "on", and the field comprising the call forwarding number is to be changed to 613-555-5678, as in Table 3, hence resolving the conflict between Tables 2 and 3. However, the field comprising the first speed dial number comprises 204-555-8765, as in Table 2, as no conflict exists (or alternatively as the criteria for resolving the conflict has been applied).

At step 365, the third proposed changes are posted to the record 112 (e.g. the contents of Table 1 are replaced by the contents of Table 4). In some embodiments, the method then ends at step 380, while in other embodiments a log of the conflict and resolution is generated at step 370 and optionally transmitted, at step 375, to an administrator of the system 100 and/or a user of a communication device 123.

Returning to step 355, if the conflict cannot be resolved, in some embodiments, at step 370 a log of the conflict can be generated, and step 375 the log can optionally be transmitted, for example to an administrator and/or the communications device 123 which initiated the change which resulted in the conflict. The log can be used to determine further criteria for conflict resolution. Otherwise, at step 380, the method 300 ends.

In some embodiments, call processing/feature functionality continues to create and reference non-exclusive copies (directly from the record 112 in the database 110, which is unaffected while the transaction is in progress). Call processing/feature functionality optionally checks/sets indications on a non-exclusive copy 250 (and/or with the record 112 in the database) to serialize changes and/or detect conflicts that previously would involve simultaneous access to the database table (and prevent potential but highly unlikely database corruption).

In other embodiments, a periodic task checks for any non-exclusive copy 250 for which changes are complete. It then applies the database locking mechanism prior to applying the changes to the database 110 (subject to conflict detection handling described above). This ensures non-exclusive changes are applied to the record 112 in the database 110 (without requiring transactions involving the affected records).

In further embodiments, when changes to the non-exclusive copy 250 indicate a conflict detected due to simultaneous access, additional validation is performed prior to applying these changes to the database 110. This validation is specific to the record 112 involved (according to the nature of the data) and can be supplemented by the creation of an original copy of the record 112 when the non-exclusive copy 250 is being created. The original copy preserves the field values of the record 112 for comparison with the non-exclusive copy 250 and the subsequently updated record 112 (which changed due to simultaneous transaction changes). A non-exclusive copy 250 with a conflict that cannot be resolved or can risk database integrity is discarded and the descriptive log is generated.

In some embodiments, the non-exclusive copy 250 can be stored with the record 112 or in separate tables/structures.

In other embodiments, memory management schemes can be applied to the creation/management/release of the non-exclusive copy 250 and the exclusive copy 150 (e.g. optimizing for ram usage, performance, simplicity or a combination thereof).

While some embodiments described here are specific to support call processing/feature functionality, the method 300 can be applied more generally to the problem of ensuring data integrity where more than one data change can be applied simultaneously with a risk of conflicting changes (even without a database in the implementation). For example, the method 300 can be applied to any data repository where a locking mechanism is not desirable/respected by the associated functionality.

Those skilled in the art will appreciate that in some embodiments, the functionality of the database 110, the applications server 120, the communications devices 123, and the computing apparatus 160 can be implemented using pre-programmed hardware or firmware elements (e.g., application specific integrated circuits (ASICs), electrically erasable programmable read-only memories (EEPROMs), etc.), or other related components. In other embodiments, the functionality of the database 110, the applications server 120, the communications devices 123, and the computing apparatus 160 can be achieved using a computing apparatus that has access to a code memory (not shown) which stores computer-readable program code for operation of the computing apparatus. The computer-readable program code could be stored on a medium which is fixed, tangible and readable directly by these components, (e.g., removable diskette, CD-ROM, ROM, fixed disk, USB drive), or the computer-readable program code could be stored remotely but transmittable to these components via a modem or other interface device connected to a network (including, without limitation, the Internet) over a transmission medium. The transmission medium can be either a non-wireless medium (e.g., optical or analogue communications lines) or a wireless medium (e.g., microwave, infrared, free-space optical or other transmission schemes) or a combination thereof.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method of concurrently updating a database comprising:
creating an exclusive copy of a record in the database, said exclusive copy for exclusive use by a first entity of a first class;
posting first proposed changes to said record from said first entity to said exclusive copy;
determining if said exclusive copy conflicts with a non-exclusive copy of said record, said non-exclusive copy for non-exclusive use by a plurality of second entities of a second class;
if said exclusive copy does not conflict with said non-exclusive copy, posting said first proposed changes to said record;
if said exclusive copy does conflict with said non-exclusive copy, determining if conflicts can be resolved; and
generating a log comprising a result.

2. The method of claim 1, further comprising creating said non-exclusive copy.

3. The method of claim 1 or claim 2, further comprising posting second proposed changes to said record from said plurality of second entities to said non-exclusive copy, and optionally wherein said posting second proposed changes comprises posting said second proposed changes in an order in which said second proposed changes are received from said plurality of said second entities.

4. The method of claim 3, further comprising posting said second proposed changes to said record.

5. The method of any preceding claim, further comprising:
determining if said first proposed changes are to be committed to said record or rolled back;
discarding said first proposed changes if said first proposed changes are to be rolled back; and
otherwise proceeding with said determining if said exclusive copy conflicts with said non-exclusive copy of said record.

6. The method of any preceding claim, further comprising determining if said non-exclusive copy exists; and, if not, posting said changes from said exclusive copy to said record.

7. The method of any preceding claim, further comprising resolving said conflict resulting in third proposed changes, and posting said third proposed changes to said record, and optionally further comprising, if said conflict between said exclusive copy and said non-exclusive cannot be resolved, then said result comprises said conflict.

8. The method of any preceding claim, wherein transactions between said first entity and records in said database occur via a view layer and transactions between said plurality of second entities and said records in said database occur via said view layer.

9. The method of any preceding claim, wherein said first class comprises low availability entities and said second class comprises high availability entities.

10. A computing apparatus for updating a database, comprising:
a communication interface enabled for (i) conveying communications between a first entity of a first class and the database, and (ii) conveying communications between a plurality of second entities of a second class and the database; and
a processing unit enabled for (i) creating an exclusive copy of a record in the database, said exclusive copy for exclusive use by said first entity, (ii) posting first proposed changes to said record from said first entity to said exclusive copy, (iii) determining if said exclusive copy conflicts with a non-exclusive copy of said record, said non-exclusive copy for non-exclusive use by said plurality of second entities, and (iv) if said exclusive copy does not conflict with said non-exclusive copy, posting said first proposed changes to said record.

11. The computing apparatus of claim 10, further enabled to distinguish between high availability and low availability devices based on how a device external to the database is attempting to access the database, and wherein said first entity comprises a low availability device and said plurality of second entities each comprise a high availability device.

12. The computing apparatus of claim 12 or claim 13, wherein the processing unit further enabled for posting second proposed changes to said record from said plurality of second entities to said non-exclusive copy.

13. The computing apparatus of any of claims 10 to 12, wherein the processing unit further enabled for, (a) determining if said first proposed changes are to be committed to said record or rolled back, (b) discarding said first proposed changes if said first proposed changes are to be rolled back, and (c) otherwise proceeding with said determining if said exclusive copy conflicts with said non-exclusive copy of said record.

14. The computing apparatus of any of claims 10 to 13, wherein the processing unit further enabled for further determining if a conflict between said exclusive copy and said non-exclusive can be resolved; and if so, resolving said conflict resulting in third proposed changes; and posting said third proposed changes to said record.

15. A method of concurrently updating a database comprising:
creating an exclusive copy of a record in the database, said exclusive copy for exclusive use by a first entity of a first class;
posting first proposed changes to said record from said first entity to said exclusive copy;
creating a non-exclusive copy of said record, said non-exclusive copy for non-exclusive use by a plurality of second entities of a second class;
determining if said first proposed changes are to be committed to said record or rolled back;
if said first proposed changes are to be rolled back, discarding said first proposed changes;
if said first proposed changes are to be committed to said record, determining if said exclusive copy conflicts with said non-exclusive copy of said record;
if said exclusive copy does not conflict with said non-exclusive copy, posting said first proposed changes to said record; and
committing said second proposed changes to said record.
